# EUROPEAN PATENT APPLICATION

(11) **EP 4 322 309 A1**
(43) Date of publication of application: **14.02.2024**
(21) Application number: 22858784.6
(22) Date of filing: 18.08.2022
(51) Int. Cl.: H01M 50/46, H01M 50/451, H01M 10/42, H01M 4/62, H01M 10/04

(54) **ELECTRONIC DEVICE COMPRISING BATTERY**

(30) Priority: 18.08.2021 KR 20210108699
(71) Applicant: Samsung Electronics Co., Ltd., Suwon-si, Gyeonggi-do 16677 (KR)
(72) Inventor: CHU, Jungho, Suwon-si, Gyeonggi-do 16677 (KR); KIM, Shihyun, Suwon-si, Gyeonggi-do 16677 (KR); PARK, Seonyoung, Suwon-si, Gyeonggi-do 16677 (KR); SOH, Minho, Suwon-si, Gyeonggi-do 16677 (KR)
(74) Representative: Gulde & Partner
(86) International application number: PCT/KR2022/012374
(87) International publication number: WO 2023/022547

(57) **Abstract**

A battery is provided. The battery comprises: a negative electrode including a first coating portion coated with a negative electrode active material and a first uncoated portion provided adjacent to the first coating portion; a positive electrode provided to face the negative electrode and including a second coating portion coated with a positive electrode active material and a second uncoated portion provided adjacent to the second coating portion; a first separator provided between one surface of the negative electrode and one surface of the positive electrode; and a second separator provided on the other surface of the negative electrode, wherein the positive electrode, the negative electrode, and at least one of the first separator and the second separator can be provided in a roll shape formed by winding.

## Description

### [Technical Field]

The disclosure relates to electronic devices, e.g., a structure of an electrode plate uncoated portion in a battery built in an electronic device. More particularly, the disclosure relates to an electronic device with a battery built in, where a hole structure is formed in the positive electrode and/or negative electrode uncoated portion, strengthening the binding force between the electrode plate and the separator and to prevent a short circuit between electrode plates and/or a slip.

### [BACKGROUND ART]

The term "electronic device" may mean a device performing a particular function according to its equipped program, such as a home appliance, an electronic scheduler, a portable multimedia player, a mobile communication terminal, a tablet personal computer (PC), a video/sound device, a desktop PC or laptop computer, a navigation for automobile, or the like. For example, electronic devices may output stored information as voices or images. As electronic devices are highly integrated, and high-speed, high-volume wireless communication becomes commonplace, an electronic device, such as a mobile communication terminal, is recently being equipped with various functions.

An electronic device has a rechargeable battery which may include a nickelcadmium battery, polymer battery, and/or lithium ion battery. By their memory effect-free and high-capacity properties, lithium ion batteries are useful for portable devices. For example, lithium ion batteries are manufactured by coating a rectangular substrate with a battery active material in a predetermined area and shape and attaching electrode tabs on the uncoated surface.

In the structure of a battery, an electrode plate with an uncoated portion not coated with an active material in an electrode assembly including a positive electrode, a negative electrode, and a separator includes a hole (opening), and separator binders coated on a first separator distal end disposed on one surface of the electrode plate and a second separator distal end disposed on another surface thereof are combined through the hole, strengthening the binding force.

The battery built in the electronic device is a secondary battery and may include, e.g., a nickel cadmium battery, a polymer battery, a lithium ion battery, and a lithium polymer battery. The battery includes an electrode assembly (jelly-roll, winding type, or stack type) including a positive electrode (or cathode), a negative electrode (or anode), a separator for separating the positive electrode and the negative electrode, and an electrolyte and a pouch formed of aluminum and having an outer surface coated with nylon and an inner surface coated with polypropylene to seal the electrode assembly.

The positive electrode may include a positive electrode substrate (Al foil), a positive electrode active material coated on the surface of the positive electrode substrate, and a conductive additive. The positive electrode substrate may also be called a positive electrode current collector. The positive electrode substrate may include an element that has low electric resistance and transfers/receives current to/from the active material and may be a metal, e.g., aluminum. The positive electrode may include a positive electrode active material, conductive additive, and a binder, as a positive electrode mixture. The positive electrode active material may include a material (e.g., NCM, NCA, or LiCoO₂) involved in the electrode reaction. The conductive additive may be a fine carbon powder that is added in small quantities to enhance conductivity between active material particles or with the metal current collector in the electrode and to prevent the binder from acting as an insulator. The binder may prevent the bonding between the active material and the conductive additive from loosening when charge/discharge is repeatedly performed by uniformly applying slurry to the current collector. The positive electrode may include a positive electrode tab.

The negative electrode may include a negative electrode substrate (Cu foil), a negative electrode active material coated on the surface of the negative electrode substrate, and a conductive additive. The negative electrode substrate may also be called a negative electrode current collector. The negative electrode substrate may include an element that has low electric resistance and transfers/receives current to/from the active material and may be a metal, e.g., copper. The negative electrode may include a negative electrode active material, conductive additive, and a binder, as a negative electrode mixture. The negative electrode active material may be formed of a graphite (carbon) layer. The conductive additive may be a fine carbon powder that is added in small quantities to enhance conductivity between active material particles or with the metal current collector in the electrode and to prevent the binder from acting as an insulator. The binder may prevent the bonding between the active material and the conductive additive from loosening when charge/discharge is repeatedly performed by uniformly applying slurry to the current collector. Recently, styrene butadiene rubber (SBR)/CMC is used instead of polyvinylidene fluoride (PVDF). The negative electrode may include a negative electrode tab.

The separator may serve to prevent a short circuit between the electrode plates (e.g., the positive electrode and/or the negative electrode). For example, frequent or strong contacts may occur to the corner of the pouch by external stress to, e.g., fall, the battery, so that the separator isolating the positive electrode and the negative electrode may peel off or the electrodes may easily be misaligned. Repeated external stress may result in a short circuit or fire and heating inside the battery, deteriorating the stability of the battery.

The above information is presented as background information only to assist with an understanding of the disclosure. No determination has been made, and no assertion is made, as to whether any of the above might be applicable as prior art with regard to the disclosure.

### [DISCLOSURE]

### [Technical Problem]

The shock when the electronic device falls is transferred to the battery, causing the battery to move. Although the battery is fixed to the electronic device by a double-sided tape, up/down/left/right movement may be caused by the extension of the pouch, causing the jelly roll in the pouch to move. Continuing movement may cause a slip between the electrode plate layers in the jelly roll, and the separator may be rolled by the slip, causing a short circuit between the positive electrode and negative electrode and hence heat and/or ignition.

To prevent drop of stability due to movement, an adhesive tape may be used to attach the electrode plate uncoated portion and the separator to strengthen the binding force or to apply an adhesive to the separator to attach the electrode plate uncoated portion and the separator. To bind the electrode plate uncoated portion and the separator, an additional adhesive is applied or an adhesive tape is used. Such additional components lead to an increase in cost and volume and a decrease in capacity.

According to various embodiments of the disclosure, it is possible to strengthen the binding force between the electrode plate uncoated portion and the separator without an additional component. It is also possible to prevent a short circuit between the electrode plates. Accordingly, it is possible to keep the charged energy balanced in the battery cell and stabilize battery performance.

Aspects of the disclosure are to address at least the above-mentioned problems and/or disadvantages and to provide at least the advantages described below. Accordingly, an aspect of the disclosure is to provide a structure of an electrode plate uncoated portion in a battery built in an electronic device. Additional aspects will be set forth in part in the description which follows and, in part, will be apparent from the description, or may be learned by practice of the presented embodiments.

### [Technical Solution]

In accordance with an aspect of the disclosure, a battery is provided. The battery includes a negative electrode including a first coating portion coated with a negative electrode active material and a first uncoated portion disposed adjacent to the first coating portion, a positive electrode disposed to face the negative electrode and including a second coating portion coated with a positive electrode active material and a second uncoated portion disposed adjacent to the second coating portion, a first separator disposed on one surface of the negative electrode, and a second separator disposed between another surface of the negative electrode and one surface of the positive electrode.

In accordance with another aspect of the disclosure, an electronic device may be formed in a j elly-roll shape as a positive electrode, a negative electrode, and at least one separator are wound. A plurality of holes may be formed in at least one of the first uncoated portion and the second uncoated portion. A binder coated on the first separator and a binder coated on the second separator may combine each other by the plurality of holes.

### [Advantageous Effects]

According to various embodiments of the disclosure, in the battery built in the electronic device, a hole structure is formed in the positive electrode and/or negative electrode uncoated portion, strengthening the binding force between the electrode plate and the separator and to prevent a short circuit between electrode plates and/or a slip.

According to various embodiments of the disclosure, in the battery built in the electronic device, a hole structure is formed in the positive electrode and/or negative electrode uncoated portion, stabilizing battery performance without an additional component and a reduction in capacity.

According to various embodiments of the disclosure, in the battery built in the electronic device, a hole structure is formed in the positive electrode and/or negative electrode uncoated portion, and an adhesive is applied to the hole, increasing the adhesion between the electrode plates.

Other aspects, advantages, and salient features of the disclosure will become apparent to those skilled in the art from the following detailed description, which, taken in conjunction with the annexed drawings, discloses of the disclosure.

### [DESCRIPTION OF THE DRAWINGS]

The above and other aspects, features, and advantages of certain embodiments of the disclosure will be more apparent from the following description taken in conjunction with the accompanying drawings, in which:
FIG. 1 is a block diagram illustrating an electronic device in a network environment according to an embodiment of the disclosure;
FIG. 2 is a front perspective view illustrating an electronic device according to an embodiment of the disclosure;
FIG. 3 is a rear perspective view illustrating an electronic device according to an embodiment of the disclosure;
FIG. 4 is an exploded perspective view illustrating an electronic device 101 according to an embodiment of the disclosure;
FIG. 5 is an exploded perspective view illustrating a battery built in an electronic device according to an embodiment of the disclosure;
FIG. 6A is a view illustrating separation of a negative electrode and a positive electrode in a battery according to an embodiment of the disclosure;
FIG. 6B is a cross-sectional view illustrating a battery according to an embodiment of the disclosure;
FIG. 7 is a cross-sectional view taken along line A-A' of a structure of FIG. 6A;
FIG. 8 is a front view illustrating a negative electrode and a positive electrode in a battery, unfolded, according to an embodiment of the disclosure;
FIG. 9 is a cross-sectional view illustrating a separator according to an embodiment of the disclosure;
FIG. 10 is a side view illustrating that a negative electrode, a separator, and a positive electrode constituting a battery are stacked according to an embodiment of the disclosure; and
FIG. 11 is a side view illustrating that an adhesive is applied to a negative electrode and a positive electrode according to an embodiment of the disclosure.

Throughout the drawings, it should be noted that like reference numbers are used to depict the same or similar elements, features, and structures.

### [MODE FOR INVENTION]

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

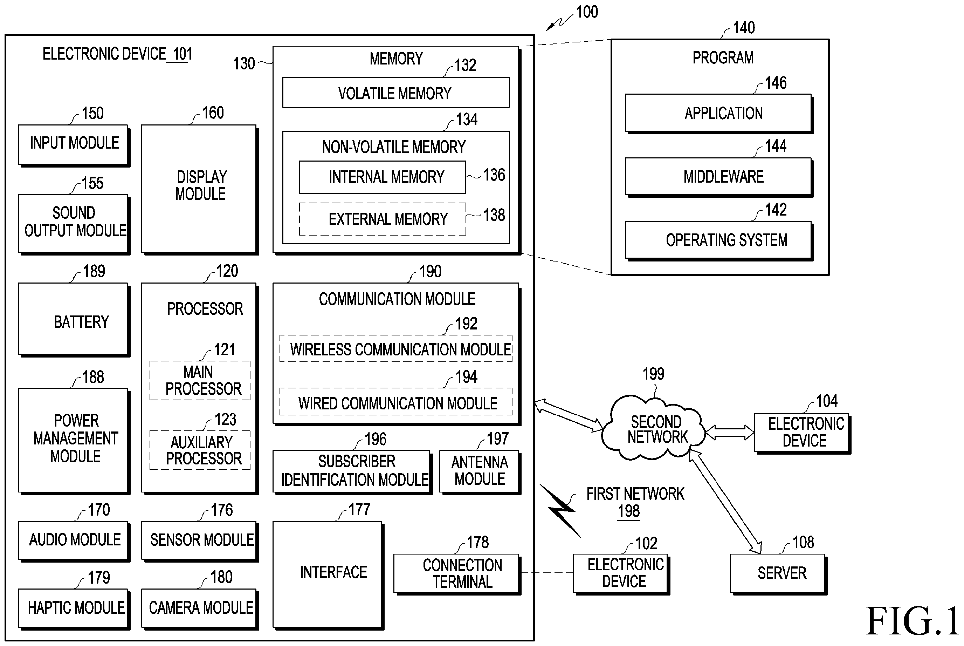

FIG. 1 is a block diagram illustrating an electronic device in a network environment according to various embodiments.

Referring to FIG. 1, an electronic device 101 in a network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input device 150, a sound output device 155, a display device 160, an audio module 170, a sensor module 176, an interface 177, a haptic module 179, a camera module 180, a power management module 188, a battery 189, a communication module 190, a subscriber identification module (SIM) 196, or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input device 150 may receive a command or data to be used by other component (e.g., the processor 120) of the electronic device 101, from the outside (e.g., a user) of the electronic device 101. The input device 150 may include, for example, a microphone, a mouse, or a keyboard.

The sound output device 155 may output sound signals to the outside of the electronic device 101. The sound output device 155 may include, for example, a speaker or a receiver. The speaker may be used for general purposes, such as playing multimedia or playing record, and the receiver may be used for an incoming calls. According to an embodiment, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. According to an embodiment, the display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. According to an embodiment, the audio module 170 may obtain the sound via the input device 150, or output the sound via the sound output device 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 388 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The antenna module 197 may transmit or receive a signal or power to or from the outside (e.g., the external electronic device). According to an embodiment, the antenna module 197 may include one or more antennas, and, therefrom, at least one antenna appropriate for a communication scheme used in the communication network, such as the first network 198 or the second network 199, may be selected, for example, by the communication module 190 (e.g., the wireless communication module 192). The signal or the power may then be transmitted or received between the communication module 190 and the external electronic device via the selected at least one antenna.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 and 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, or client-server computing technology may be used, for example.

The electronic device according to various embodiments may be one of various types of electronic devices. The electronic devices may include, for example, a portable communication device (e.g., a smart phone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment as set forth herein may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

A method according to various embodiments of the disclosure may be included and provided in a computer program product. The computer program products may be traded as commodities between sellers and buyers. The computer program product may be distributed in the form of a machine-readable storage medium (e.g., a compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

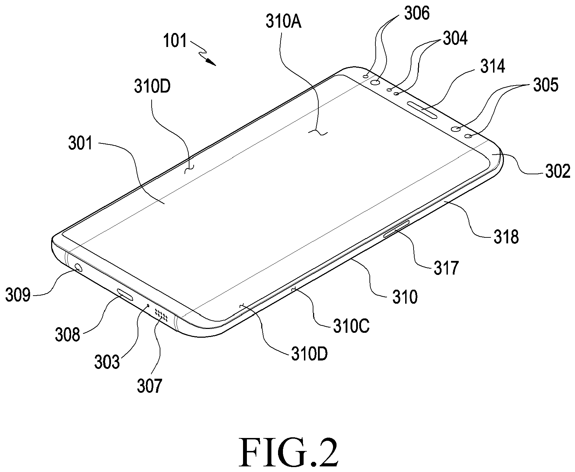

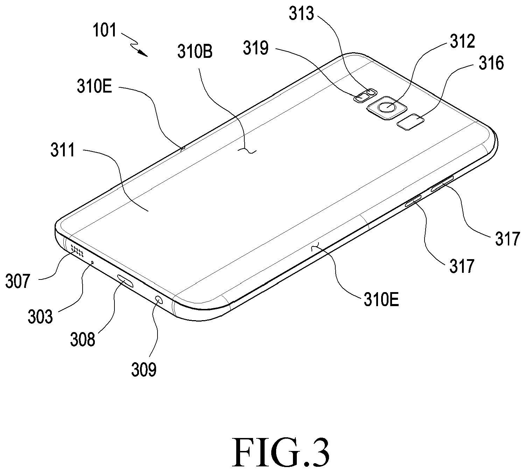

FIG. 2 is a front perspective view illustrating an electronic device according to an embodiment of the disclosure. FIG. 3 is a rear perspective view illustrating an electronic device according to an embodiment of the disclosure.

Referring to FIGS. 2 and 3, according to an embodiment, an electronic device 101 may include a housing 310 with a first (or front) surface 310A, a second (or rear) surface 310B, and a side surface 310C surrounding a space between the first surface 310A and the second surface 310B. According to another embodiment (not shown), the housing may denote a structure forming part of the first surface 310A, the second surface 310B, and the side surface 310C of FIG. 2. According to an embodiment, at least part of the first surface 310A may have a substantially transparent front plate 302 (e.g., a glass plate or polymer plate including various coat layers). The second surface 310B may be formed by a rear plate 311 that is substantially opaque. The rear plate 311 may be formed of, e.g., laminated or colored glass, ceramic, polymer, metal (e.g., aluminum, stainless steel (STS), or magnesium), or a combination of at least two thereof. The side surface 310C may be formed by a side bezel structure (or a "side member") 318 that couples to the front plate 302 and the rear plate 311 and includes a metal and/or polymer. According to an embodiment, the rear plate 311 and the side bezel plate 318 may be integrally formed together and include the same material (e.g., a metal, such as aluminum).

In the embodiment illustrated, the front plate 302 may include two first areas 310D, which seamlessly and bendingly extend from the first surface 310A to the rear plate 311, on both the long edges of the front plate 302. In the embodiment (refer to FIG. 3) illustrated, the rear plate 311 may include two second areas 310E, which seamlessly and bendingly extend from the second surface 310B to the front plate, on both the long edges. According to an embodiment, the front plate 302 (or the rear plate 311) may include only one of the first areas 310 (or the second areas 310E). Alternatively, the first areas 310D or the second areas 301E may partially be excluded. According to an embodiment, at side view of the electronic device 101, the side bezel structure 318 may have a first thickness (or width) for sides that do not have the first areas 310D or the second areas 310E and a second thickness, which is smaller than the first thickness, for sides that have the first areas 310D or the second areas 310E.

According to an embodiment, the electronic device 101 may include at least one or more of a display 301, audio modules 303, 307, and 314, sensor modules 304, 316, and 319, camera modules 305, 312, and 313, key input devices 317, a light emitting device 306, and connector holes 308 and 309. According to an embodiment, the electronic device 101 may exclude at least one (e.g., the key input device 317 or the light emitting device 306) of the components or may add other components.

The display 301 may be exposed through a significant portion of the front plate 302. According to an embodiment, at least a portion of the display 301 may be exposed through the front plate 302 forming the first surface 310A and the first areas 310D of the side surface 310C. According to an embodiment, the edge of the display 301 may be formed to be substantially the same in shape as an adjacent outer edge of the front plate 302. According to another embodiment (not shown), the interval between the outer edge of the display 301 and the outer edge of the front plate 302 may remain substantially even to give a larger area of exposure the display 301.

According to an embodiment (not shown), the screen display area of the display 301 may have a recess or opening in a portion thereof, and at least one or more of the audio module 314, the sensor module 304, the camera module 305, and the light emitting device 306 may be aligned with the recess or opening. According to another embodiment (not shown), at least one or more of the audio module 314, the sensor module 304, the camera module 305, the fingerprint sensor 316, and the light emitting device 306 may be included on the rear surface of the screen display area of the display 301. According to an embodiment (not shown), the display 301 may be disposed to be coupled with, or adjacent, a touch detecting circuit, a pressure sensor capable of measuring the strength (pressure) of touches, and/or a digitizer for detecting a magnetic field-type stylus pen. According to an embodiment, at least part of the sensor modules 304 and 119 and/or at least part of the key input device 317 may be disposed in the first areas 310D and/or the second areas 310E.

The audio modules 303, 307, and 314 may include a microphone hole 303 and speaker holes 307 and 314. The microphone hole 303 may have a microphone inside to obtain external sounds. According to an embodiment, there may be a plurality of microphones to be able to detect the direction of a sound. The speaker holes 307 and 314 may include an external speaker hole 307 and a phone receiver hole 314. According to an embodiment, the speaker holes 307 and 314 and the microphone hole 303 may be implemented as a single hole, or speakers may be rested without the speaker holes 307 and 314 (e.g., piezo speakers).

The sensor modules 304, 316, and 319 may generate an electrical signal or data value corresponding to an internal operating state or external environmental state of the electronic device 101. The sensor modules 304, 316, and 319 may include a first sensor module 304 (e.g., a proximity sensor) disposed on the first surface 310A of the housing 310, and/or a second sensor module (not shown) (e.g., a fingerprint sensor), and/or a third sensor module 319 (e.g., a heart-rate monitor (HRM) sensor) disposed on the second surface 310B of the housing 310, and/or a fourth sensor module 316 (e.g., a fingerprint sensor). The fingerprint sensor may be disposed on the second surface 310A as well as on the first surface 310B (e.g., the display 301) of the housing 310. The electronic device 101 may further include sensor modules not shown, e.g., at least one of a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor (e.g., the sensor module 304).

The camera modules 305, 312, and 313 may include a first camera device 305 disposed on the first surface 310A of the electronic device 101, and a second camera device 312 and/or a flash 313 disposed on the second surface 310B. The camera modules 305 and 312 may include one or more lenses, an image sensor, and/or an image signal processor. The flash 313 may include, e.g., a light emitting diode (LED) or a xenon lamp. According to an embodiment, two or more lenses (an infrared (IR) camera, a wide-angle lens, and a telescopic lens) and image sensors may be disposed on one surface of the electronic device 101.

The key input device 317 may be disposed on the side surface 310C of the housing 310. According to another embodiment, the electronic device 101 may exclude all or some of the above-mentioned key input devices 317 and the excluded key input devices 317 may be implemented in other forms, e.g., as soft keys, on the display 301. According to an embodiment, the key input device may include the sensor module 316 disposed on the second surface 310B of the housing 310.

The light emitting device 306 may be disposed on, e.g., the first surface 310A of the housing 310. The light emitting device 306 may provide, e.g., information about the state of the electronic device 101 in the form of light. According to an embodiment, the light emitting device 306 may provide a light source that interacts with, e.g., the first camera module 305. The light emitting device 306 may include, e.g., a light emitting diode (LED), an infrared (IR) LED, or a xenon lamp.

The connector holes 308 and 309 may include a first connector hole 308 for receiving a connector (e.g., a universal serial bus (USB) connector) for transmitting or receiving power and/or data to/from an external electronic device and/or a second connector hole 309 (e.g., an earphone jack) for receiving a connector for transmitting or receiving audio signals to/from the external electronic device.

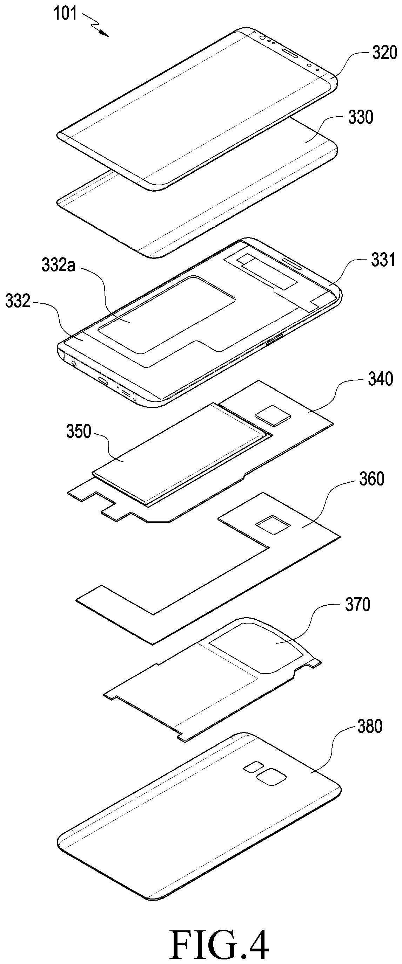

FIG. 4 is an exploded perspective view illustrating an electronic device according to an embodiment of the disclosure.

Referring to FIG. 4, an electronic device 101 (e.g., the electronic device 101 of FIGS. 1 to 3) may include a side bezel structure 331, a first supporting member 332 (e.g., a bracket), a front plate 320, a display 330, a printed circuit board (PCB) 340, a battery 350, a second supporting member 360 (e.g., a rear case), an antenna 370, and a rear plate 380. According to an embodiment, the electronic device 101 may exclude at least one (e.g., the first supporting member 332 or second supporting member 360) of the components or may add other components. At least one of the components of the electronic device 101 may be the same or similar to at least one of the components of the electronic device 101 of FIG. 2 or 3 and no duplicate description is made below.

The first supporting member 332 may be disposed inside the electronic device 101 to be connected with the side bezel structure 331 or integrated with the side bezel structure 331. The first supporting member 332 may be formed of, e.g., a metal and/or non-metallic material (e.g., polymer). The display 330 may be joined onto one surface of the first supporting member 332, and the printed circuit board 340 may be joined onto the opposite surface of the first supporting member 311. A processor, memory, and/or interface may be mounted on the printed circuit board 340. The processor may include one or more of, e.g., a central processing unit, an application processor, a graphic processing device, an image signal processing, a sensor hub processor, or a communication processor.

The memory may include, e.g., a volatile or non-volatile memory.

The interface may include, e.g., a high definition multimedia interface (HDMI), a universal serial bus (USB) interface, a secure digital (SD) card interface, and/or an audio interface. The interface may electrically or physically connect, e.g., the electronic device 101 with an external electronic device and may include a USB connector, an SD card/multimedia card (MMC) connector, or an audio connector.

The battery 350 may be a device for supplying power to at least one component of the electronic device 101. The battery 450 may include, e.g., a primary cell which is not rechargeable, a secondary cell which is rechargeable, or a fuel cell. At least a portion of the battery 350 may be disposed on substantially the same plane as the printed circuit board 340. The battery 350 may be integrally or detachably disposed inside the electronic device 101.

The antenna 370 may be disposed between the rear plate 380 and the battery 350. The antenna 370 may include, e.g., a near-field communication (NFC) antenna, a wireless charging antenna, and/or a magnetic secure transmission (MST) antenna. The antenna 370 may perform short-range communication with, e.g., an external device or may wirelessly transmit or receive power necessary for charging. According to an embodiment, an antenna structure may be formed by a portion or combination of the side bezel structure 331 and/or the first supporting member 332.

A structure of a battery is described below.

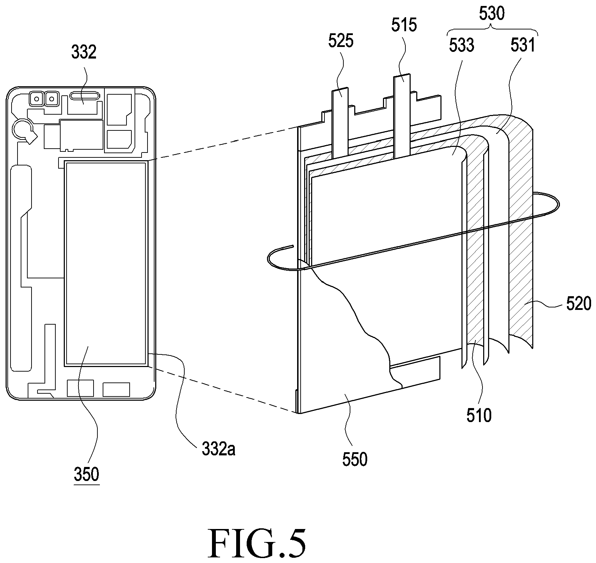

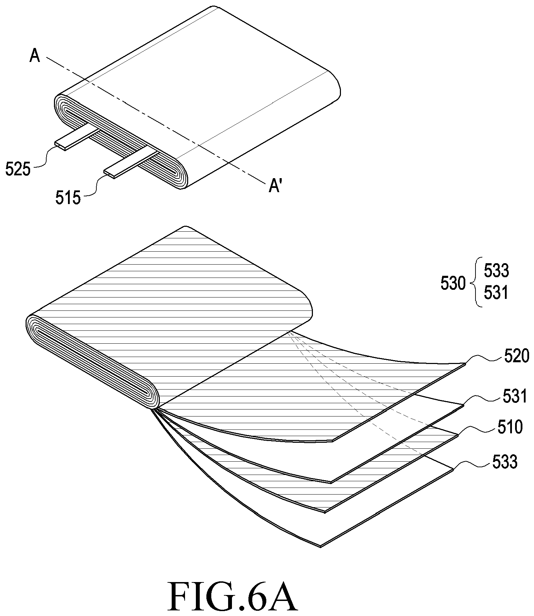

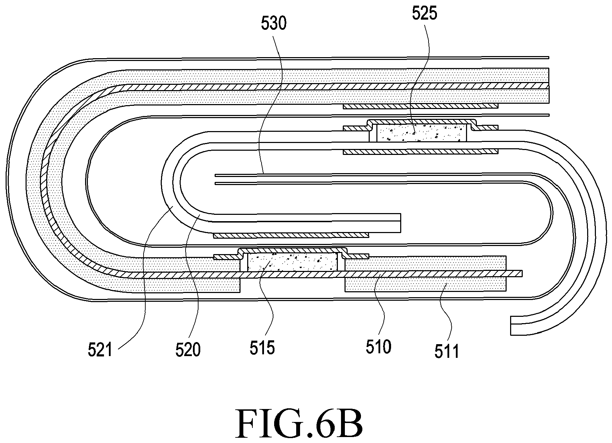

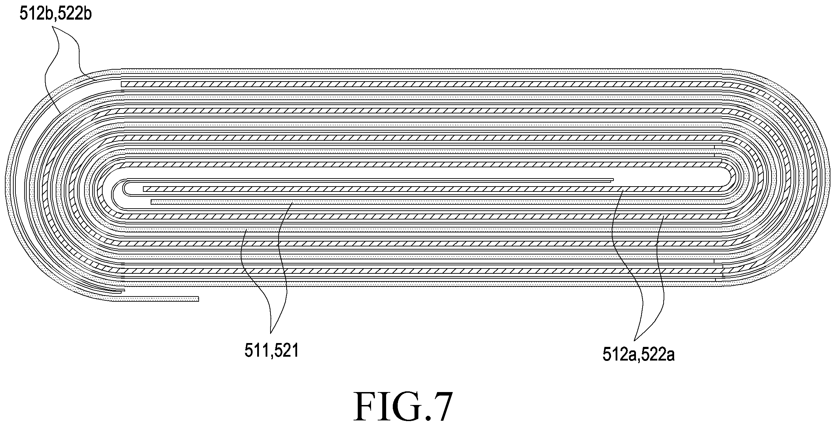

FIG. 5 is an exploded perspective view illustrating a battery mounted in an electronic device according to an embodiment of the disclosure. FIG. 6A is a view illustrating separation of a negative electrode and a positive electrode in a battery according to an embodiment of the disclosure. FIG. 6B is a cross-sectional view illustrating a battery according to an embodiment of the disclosure. FIG. 7 is a cross-sectional view taken along line A-A' of a structure of FIG. 6A.

Referring to FIGS. 5, 6A, 6B, and 7, according to an embodiment of the disclosure, the battery 350 may be seated in a seating hole 332a formed in a first supporting member 332 (e.g., a bracket) of an electronic device (e.g., the electronic device 101 of FIGS. 1 to 4). The battery 350 may include a negative electrode 510, a positive electrode 520, and at least one separator 530 as an electrode assembly. As another example, the battery 350 may include a pouch 550 to receive the electrode assembly.

According to an embodiment, the battery 350 may have a wound structure. The battery 350 may have the negative electrode 510 formed on one surface of the at least one separator 530 and the positive electrode 520 disposed on the opposite surface thereof. The negative electrode 510, the at least one separator 530, and the positive electrode 520 together may be wound in a roll shape. For example, the electrode assembly of the battery 350 may be a flexible jelly roll-type secondary battery that may be reversibly bent, and the jelly roll-type secondary battery may be produced by stacking a negative electrode 510, a positive electrode 520, and at least one separator 530 interposed between the negative electrode 510 and the positive electrode 520 and winding them in a jelly roll shape.

According to an embodiment, the battery 350 may be produced in a circular or elliptical shape at least a portion of which has a curved surface, and the negative electrode 510, the at least one separator 530, and the positive electrode 520 may be wound, and one surface may be prepared in a flat rectangular shape corresponding to the shape of the seating hole 332a. For example, the negative electrode 510 may be a flexible rectangular sheet. The first uncoated portion 512 may include an uncoated portion (e.g., a front end portion 512a of FIG. 7) formed at a front end and an uncoated portion (e.g., a rear end portion 512b of FIG. 7) formed at a rear end.

According to an embodiment, the pouch 550 may receive, and seal off the outside, the electrode assembly. The pouch 550 may include aluminum (Al). As another example, the pouch 550 may be filled with an electrolyte and have electrodes immersed therein. The pouch 550 may be structured to have an internal space or may include an insulating member that wraps the electrode assembly.

FIG. 6A is a view illustrating separation of a negative electrode 510 and a positive electrode 520 in a battery 350 according to an embodiment of the disclosure. FIG. 6A schematically illustrates each layer included in a jelly roll-type battery 350. For example, the battery 350 may include a negative electrode 510, a positive electrode 520, and the at least one separator 530. The negative electrode 510, the positive electrode 520, and at least one separator 530 interposed between the negative electrode 510 and the positive electrode 520 may be stacked. There may be included at least one separator 530 which may include a first separator 531 and a second separator 533.

According to an embodiment, there may be provided a plurality of separators 530 which may be disposed on the innermost layer of the jelly roll-type battery 350 and between the negative electrode 510 and the positive electrode 520. The at least one separators 530 may support the battery 350 while simultaneously preventing a contact between the negative electrode 510 and the positive electrode 520. FIG. 6B is a cross-sectional view illustrating a battery 350 according to an embodiment of the disclosure. FIG. 6B is an enlarged view of a portion of the cross section taken along A-A' of the battery 350, illustrating a wound structure of the battery 350 and components included in the battery 350. A negative electrode 510 and/or a negative electrode tab 515 are disposed on one surface of the at least one separator 530 positioned inside (or at the front end of) the battery 350, and a positive electrode 520 and/or a positive electrode tab 525 may be disposed on another surface thereof.

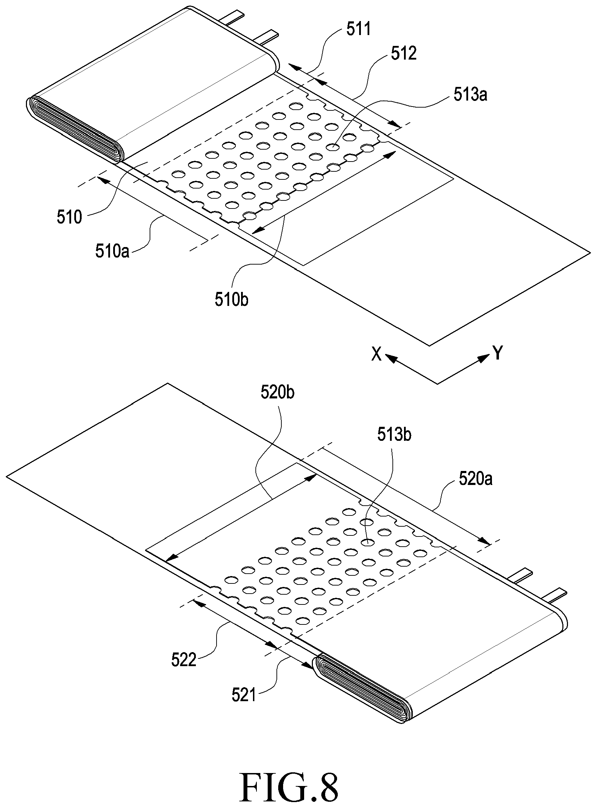

The negative electrode 510 may include a substrate surface formed of a copper foil (Cu foil), a coating portion (e.g., a first coating portion 511 of FIG. 8) in which a negative electrode active material is coated or applied to the substrate surface, and an uncoated portion (e.g., the first uncoated portion 512 of FIG. 8) in which the negative electrode active material is not coated or applied. The coating portion (e.g., the first coating portion 511 of FIG. 8) may have the negative electrode active material coated or applied in a designated thickness and area and may form substantially the entire surface except for two opposite ends of the negative electrode 510.

The positive electrode 520 may have a coating portion (e.g., a second coating portion 521 of FIG. 8) coated with a positive electrode active material and an uncoated portion (e.g., a second uncoated portion 522 of FIG. 8) adjacent to the coating portion (e.g., the second coating portion 521 of FIG. 8). The positive electrode 520 may have a length or area corresponding to the negative electrode 510.

According to an embodiment, the negative electrode tab 515 prepared on the negative electrode 510 may be formed on an uncoated portion of the negative electrode 510 which is free from a negative electrode active material. The positive electrode tab 525 prepared on the positive electrode 520 may be formed on an uncoated portion of the positive electrode 520 which is free from a positive electrode active material.

FIG. 7 is a cross-sectional view taken along line A-A' of the structure of FIG. 6A. FIG. 7 illustrates an example of a front surface of the cross section taken along A-A' of the battery 350. For example, the negative electrode 510 may be wound in a circular or elliptical shape in a state in which the positive electrode 520 and the at least one separator 530 are stacked, starting from the uncoated portion (e.g., the front end portion 512a of FIG. 7) formed at the front end, and the winding may be complete, ending with the uncoated portion (e.g., the rear end portion 512b of FIG. 7) formed at the rear end. A negative electrode active material-coated coating portion (e.g., the first coating portion 511 of FIG. 8) and a positive electrode active material-coated coating portion (e.g., the second coating portion 521 of FIG. 8) may be positioned between the uncoated portion (e.g., the front end portion 512a of FIG. 7) on the side of the front end portion and the uncoated portion (e.g., the rear end portion 512b of FIG. 7) on the side of the rear end portion. As another example, the uncoated portion (e.g., the front end portion 512a of FIG. 7) formed at the front end may be positioned inside, and the uncoated portion (e.g., the rear end portion 512b of FIG. 7) formed at the rear end may be positioned adjacent to the outer surface of the battery 350, relative to the uncoated portion (e.g., the front end portion 512a of FIG. 7) formed at the front end.

According to an embodiment, the negative electrode 510 and the positive electrode 520 of the battery 350 may be disposed to face each other in shapes corresponding to each other. A negative electrode tab 515 may be prepared which externally protrudes from one side of the negative electrode 510. The positive electrode tab 525 may be prepared which externally protrudes from one side of the positive electrode 520. The negative electrode tab 515 and the positive electrode tab 525 may protrude in lengths corresponding to each other and be spaced apart from each other while facing each other.

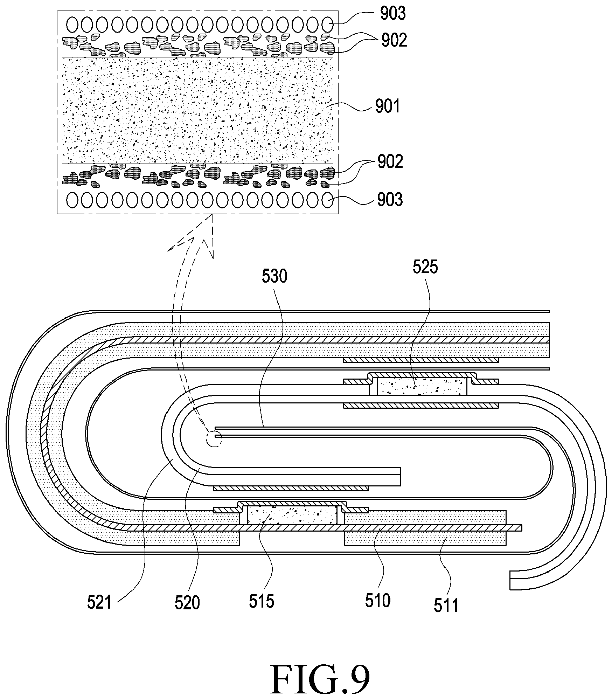

FIG. 8 is a front view illustrating a negative electrode and a positive electrode in a battery, unfolded, according to an embodiment of the disclosure. FIG. 9 is a cross-sectional view illustrating a separator according to an embodiment of the disclosure.

Referring to FIG. 8, a battery (e.g., the battery 350 of FIG. 5) may include a negative electrode 510 and a positive electrode 520 that faces the negative electrode 510 with a separator (e.g., the at least one separator 530 of FIG. 5) disposed therebetween. The structure of the negative electrode 510, the positive electrode 520, and the at least one separator 530 of the battery 350 of FIGS. 8 to 11 may be the same in whole or part as the structure of the negative electrode sheet 510, the positive electrode sheet 520, and the at least one separator 530 of FIGS. 5 to 7.

According to an embodiment, the negative electrode 510 may include a first coating portion 511 coated with a negative electrode active material and a first uncoated portion 512 disposed adjacent to the first coating portion. The negative electrode 510 may be formed in a first length 510a in a first direction X and in a second length 510b shorter than the first length 510a in a second direction Y.

According to an embodiment, the first uncoated portion 512 may form areas of two opposite end portions (front end portion and rear end portion) of the negative electrode 510 and, in one area, a negative electrode tab 515 protruding outward of the negative electrode 510 may be disposed. The negative electrode tab 515 may be spaced a predetermined distance apart from, and thus prevented from overlapping, the positive electrode tab 525. At least one hole 513a may be included in at least one area of the first uncoated portion 512.

According to an embodiment, the plurality of holes 513a formed in the first uncoated portion 512 of the negative electrode 510 may be implemented in various shapes and/or sizes. As an example, FIG. 8 illustrates circular holes 513a and 513b having a constant interval and size, and at least one of the number, shape, arrangement, size, and inter-hole interval of the holes may be varied.

According to an embodiment, when the negative electrode 510 is wound in a jelly-roll shape, the length of one layer of the jelly roll in which it is wound by the negative electrode 510 may gradually increase from the front to rear end. As another example, when the negative electrode 510 is wound together with the positive electrode 520 and the at least one separator 530, the at least one separator 530 positioned on one surface of the electrode plates 510 and 520 and the at least one separator 530 positioned on the other surface may contact each other through the plurality of holes 513a formed in the uncoated portion of the electrode plates. If undergoing compression of the process of manufacturing the battery 350, the two separators may be attached together by the binder of the separators, with the electrode plates disposed therebetween, strengthening the binding force between the electrode plates 510 and 520 and the at least one separator530.

According to an embodiment, the positive electrode 520 may include a second coating portion 521 coated with a positive electrode active material and a second uncoated portion 522 disposed adjacent to the second coating portion 521. The positive electrode 520 may have a length or area corresponding to the negative electrode 510. As another example, the positive electrode 520 may have a larger area than the negative electrode 510. The positive electrode 520 may be formed in a third length 520a in the first direction X and in a fourth length 520b shorter than the third length 520a in the second direction Y. The positive electrode 520 may include a substrate surface (e.g., the positive electrode 520 of FIG. 6B) formed of an aluminum foil (Al foil), a second coating portion 521 in which a positive electrode active material is coated or applied to the substrate surface, and a second uncoated portion 522 in which the positive electrode active material is not coated or applied. The positive electrode active material of the second coating portion 521 may be coated or applied in a designated thickness and/or area and may form substantially the entire surface except for two opposite ends of the positive electrode 520.

According to an embodiment, the second uncoated portion 522 may form areas of two opposite end portions of the positive electrode 520 and, in one area, a positive electrode tab 525 protruding outward of the positive electrode 520 may be disposed. At least one hole 513b may be included in at least one area of the second uncoated portion 522.

According to an embodiment, the positive electrode 520 may be a flexible rectangular sheet. The second uncoated portion 522 may include an uncoated portion (e.g., the front end portion 512a of FIG. 7) formed at the front end and an uncoated portion (e.g., the rear end portion 512b of FIG. 7) formed at the rear end. For example, to manufacture a jelly roll-type battery 350, the positive electrode 520 may be wound in a circular or elliptical shape in a state in which the negative electrode 510 and the at least one separator 530 are stacked, starting from the uncoated portion (e.g., the front end portion 512a of FIG. 7) formed at the front end, and the winding may be complete, ending with the uncoated portion (e.g., the rear end portion 512b of FIG. 7) formed at the rear end. As another example, the uncoated portion (e.g., the front end portion 512a of FIG. 7) formed at the front end may be positioned inside, and the uncoated portion (e.g., the rear end portion 512b of FIG. 7) formed at the rear end may be positioned adjacent to the outer surface of the battery 350, relative to the uncoated portion (e.g., the front end portion 512a of FIG. 7) formed at the front end.

According to an embodiment, there may be configured a plurality of separators 530 that include the first separator 531 and the second separator 533. The first separator 531 and the second separator 533 may be formed of the same material. For example, the first separator 531 and the second separator 533 may include an adhesive (e.g., a binder component). The first separator 531 may support the negative electrode 510, and the second separator 533 may be disposed between one surface of the negative electrode 510 and one surface of the positive electrode 520, blocking a contact between the negative electrode 510 and the positive electrode 520 and hence preventing a short circuit.

According to an embodiment, the negative electrode 510 may be disposed between the first separator 531 and the second separator 533. The first separator 531 and the second separator 533 may correspond in area to each other and may be larger in area than the negative electrode 510. For example, the length of the first separator 531 may be larger than the length 510a or 510b of the negative electrode 510, and the first coating portion 511 coated with the active material of the negative electrode 510 and the first uncoated portion 512 coated with no active material may be attached to each other by the binder (e.g., adhesive polymer) of the first separator 531. As another example, the length of the second separator 533 may be larger than the length of the negative electrode 510. The first coating portion 511 coated with the active material of the negative electrode 510 and the second uncoated portion 522 coated with no active material may be attached to each other by the binder (e.g., adhesive polymer) of the second separator 533.

According to an embodiment, the binder (e.g., adhesive polymer) of the first separator 531 and the binder of the second separator 533 may be adhered to each other through the holes 513a formed in the first uncoated portion 512 coated with no active material.

According to an embodiment, the area of the first separator 531 and the second separator 533 may be larger than the area of the negative electrode 510 so that an end of the negative electrode 510 disposed inside is not exposed to the outside.

According to an embodiment, the positive electrode 520 may be disposed on one surface of the second separator 533. The first separator 531 and the second separator 533 may correspond in area to each other and may be larger in area than the positive electrode 520. For example, the length of the second separator 531 may be larger than the length 520a or 520b of the positive electrode 520, and the second coating portion 521 coated with the active material of one surface of the positive electrode 520 and the second uncoated portion 522 coated with no active material may be attached to each other by the binder (e.g., adhesive polymer) of the second separator 533. As another example, the length of the second separator 533 may be larger than the length of the negative electrode 510 to separate the positive electrode 520 from the negative electrode 510 not to contact the negative electrode 510.

According to an embodiment, the at least one separator 530 may include a second separator disposed on one surface of the negative electrode 510 and a second separator 533 disposed between the other surface of the negative electrode 510 and one surface of the positive electrode 520. The first separator 531 and the second separator 533 may be coated with a bonding material (binder) so that the first separator 531 and the second separator 533 may be bonded to each other through multiple holes.

FIG. 9 is a cross-sectional view illustrating a separator according to an embodiment of the disclosure.

Referring to FIG. 9, according to an embodiment, the at least one separator 530 may include a separator fabric 901, ceramic materials 902 applied to one surface and another surface of the separator fabric 901, and an adhesive material 903 coated on the outer surface of the ceramic material 902.

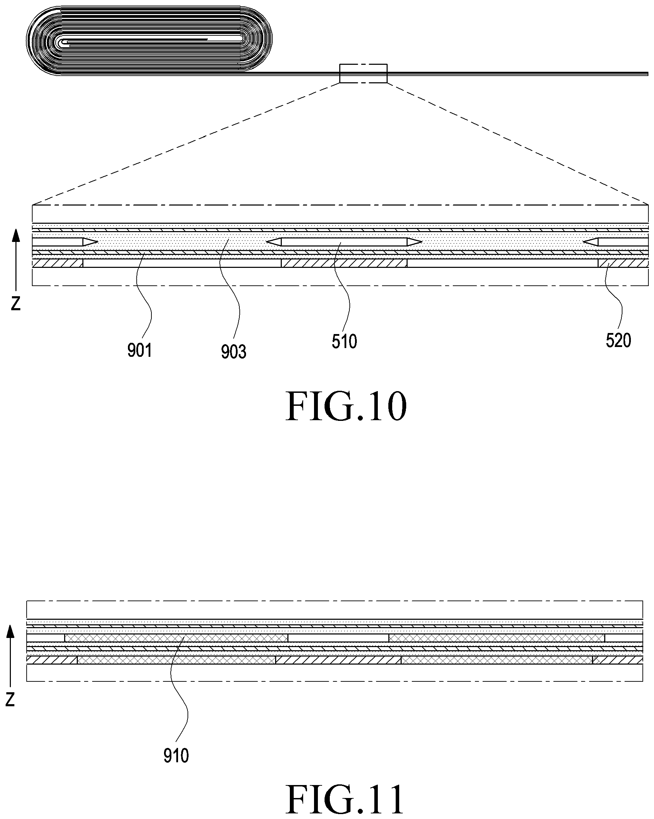

FIG. 10 is a side view illustrating that a negative electrode, the at least one separator, and a positive electrode constituting a battery are stacked according to an embodiment of the disclosure. FIG. 11 is a side view illustrating that an adhesive is applied to a negative electrode and a positive electrode according to an embodiment of the disclosure.

Referring to FIGS. 10 and 11, the positive electrode 520, the second separator 533, the negative electrode 510, and the first separator 531 may be sequentially stacked from the outside to inside of the battery 350 (along the Z direction).

The binder (e.g., the adhesive material 903 of FIG. 9) of the first separator 531 and the binder (e.g., the adhesive material 903 of FIG. 9) of the second separator 533 with respect to the negative electrode 510 may contact each other through holes 513a formed in the first uncoated portion 512 of the negative electrode 510. If compression is undergone in the process of manufacturing the battery, the binders (e.g., the adhesive material 903 of FIG. 9) of the at least one separator 530 may contact each other through the holes 513a and 513b formed in the electrode plates so that the binding force between the electrode plates 510 and 520 and the separators 531 and 533 may be strengthened.

According to an embodiment, it is possible to strongly bind the electrode plates 510 and 520 and the separators 531 and 533 even without an increase in thickness by additionally applying an adhesive to at least an area of the holes 513a formed in the first uncoated portion 512 or the holes 513b formed in the second uncoated portion 522.

According to an embodiment of the disclosure, as the battery 350 built in the electronic device is manufactured so that holes 513a and 513b are formed in the uncoated portions 512 and 522 of the electrode plates, it is possible to provide an electronic device that may maintain durability even when shocks to the electronic device are transferred to the battery to cause it to move.

According to an embodiment of the disclosure, an electronic device may comprise a battery. The battery may include a negative electrode including a first coating portion coated with a negative electrode active material and a first uncoated portion disposed adjacent to the first coating portion, a positive electrode disposed to face the negative electrode and including a second coating portion coated with a positive electrode active material and a second uncoated portion disposed adjacent to the second coating portion, a first separator disposed between one surface of the negative electrode and one surface of the positive electrode, and a second separator disposed on another surface of the negative electrode. The positive electrode, the negative electrode, and the at least one of the first separator and the second separator may be prepared in a roll shape formed by winding. A plurality of holes may be formed in at least one of the first uncoated portion and the second uncoated portion. A binder coated on the first separator and a binder coated on the second separator may combine each other through the plurality of holes.

According to an embodiment of the disclosure, an adhesive may be further applied to the plurality of holes.

According to an embodiment of the disclosure, the negative electrode may further include a negative electrode tab on the first uncoated portion not coated with the negative electrode active material, and the positive electrode may further include a positive electrode tab on the second uncoated portion not coated with the positive electrode active material.

According to an embodiment of the disclosure, the first uncoated portion may be formed in at least one of a front end portion and a rear end portion of the negative electrode, and the second uncoated portion may be formed in at least one of a front end portion and a rear end portion of the positive electrode.

According to an embodiment of the disclosure, the positive electrode and the negative electrode may further include a substrate surface formed of a metal, a conductive additive, and a binder.

According to an embodiment of the disclosure, the conductive additive may include a fine carbon powder, and the binder may be formed by uniformly applying slurry.

According to an embodiment of the disclosure, the first separator and the second separator may include a separator fabric, a ceramic, and an adhesive binder.

According to an embodiment of the disclosure, the second separator, the negative electrode, and the first separator may be sequentially stacked.

According to an embodiment of the disclosure, the binder coated on the first separator and the binder coated on the second separator may directly combine each other through the plurality of holes formed in the first uncoated portion and the plurality of holes formed in the second uncoated portion.

According to an embodiment of the disclosure, an adhesive may be applied to at least a part of the plurality of holes formed in the first uncoated portion of the negative electrode or the plurality of holes formed in the second uncoated portion of the positive electrode, and the binder coated on the first separator and the binder coated on the second separator may directly combine with the adhesive.

According to an embodiment of the disclosure, the ceramic may be applied to one surface and another surface of the separator fabric, and the adhesive binder may be coated on an outer surface of the ceramic.

According to an embodiment of the disclosure, a battery may comprise a negative electrode including a first coating portion coated with a negative electrode active material and a first uncoated portion not coated with the negative electrode active material, a positive electrode including a second coating portion coated with a positive electrode active material and a second uncoated portion not coated with the positive electrode active material disposed between one surface of the negative electrode and one surface of the positive electrode, and a second separator disposed on another surface of the negative electrode. The negative electrode, the first separator, the positive electrode, and the second separator may be stacked to form a roll shape. A plurality of holes may be formed in at least one of the first uncoated portion and the second uncoated portion. A binder coated on the first separator and a binder coated on the second separator may combine each other directly through the plurality of holes or through an adhesive applied to the plurality of holes.

According to an embodiment of the disclosure, the negative electrode may further include a negative electrode tab on the first uncoated portion not coated with the negative electrode active material, and the positive electrode may further include a positive electrode tab on the second uncoated portion not coated with the positive electrode active material.

According to an embodiment of the disclosure, the first uncoated portion may be formed in at least one of a front end portion and a rear end portion of the negative electrode, and the second uncoated portion may be formed in at least one of a front end portion and a rear end portion of the positive electrode.

According to an embodiment of the disclosure, the positive electrode and the negative electrode may include a substrate surface formed of a metal, a conductive additive, and a binder.

According to an embodiment of the disclosure, the conductive additive may include a fine carbon powder, and the binder may be formed by uniformly applying slurry.

According to an embodiment of the disclosure, the first separator and the second separator may include a separator fabric, a ceramic, and an adhesive binder.

According to an embodiment of the disclosure, the binder coated on the first separator and the binder coated on the second separator may directly combine each other through holes formed in the first uncoated portion and holes formed in the second uncoated portion.

According to an embodiment of the disclosure, an adhesive may be applied to at least an area of the plurality of holes formed in the first uncoated portion of the negative electrode and the plurality of holes formed in the second uncoated portion of the positive electrode, and the binder coated on the first separator and the binder coated on the second separator may directly combine with the adhesive.

According to an embodiment of the disclosure, the ceramic may be applied to one surface and another surface of the separator fabric, and the adhesive binder may be coated on an outer surface of the ceramic.

It is apparent to one of ordinary skill in the art that the electronic devices according to an embodiment of the disclosure as described above are not limited to the above-described embodiments and those shown in the drawings, and various changes, modifications, or alterations may be made thereto without departing from the scope of the disclosure.

While the disclosure has been shown and described with reference to an embodiment thereof, it will be understood by those skilled in the art that various changes in form and details may be made therein without departing from the spirit and scope of the disclosure as defined by the appended claims and their equivalents.

## Claims

1. An electronic device comprising:
a battery including:
a negative electrode including a first coating portion coated with a negative electrode active material and a first uncoated portion disposed adjacent to the first coating portion,
a positive electrode disposed to face the negative electrode and including a second coating portion coated with a positive electrode active material and a second uncoated portion disposed adjacent to the second coating portion,
a first separator disposed between one surface of the negative electrode and one surface of the positive electrode, and
a second separator disposed on another surface of the negative electrode,
wherein the positive electrode, the negative electrode, and the at least one of the first separator or the second separator are prepared in a roll shape formed by winding,
wherein a plurality of holes are formed in at least one of the first uncoated portion and the second uncoated portion, and
wherein a binder coated on the first separator and a binder coated on the second separator combine each other through the plurality of holes.

2. The electronic device of claim 1, wherein an adhesive is further applied to the plurality of holes.

3. The electronic device of claim 1,
wherein the negative electrode further includes a negative electrode tab on the first uncoated portion not coated with the negative electrode active material, and
wherein the positive electrode further includes a positive electrode tab on the second uncoated portion not coated with the positive electrode active material.

4. The electronic device of claim 1,
wherein the first uncoated portion is formed in at least one of a front end portion and a rear end portion of the negative electrode, and
wherein the second uncoated portion is formed in at least one of a front end portion and a rear end portion of the positive electrode.

5. The electronic device of claim 1, wherein the positive electrode and the negative electrode include a substrate surface formed of a metal, a conductive additive, and a binder.

6. The electronic device of claim 5,
wherein the conductive additive includes a fine carbon powder, and
wherein the binder is formed by uniformly applying slurry.

7. The electronic device of claim 1, wherein the first separator and the second separator include a separator fabric, a ceramic, and an adhesive binder.

8. The electronic device of claim 1, wherein the binder coated on the first separator and the binder coated on the second separator directly combine each other through the plurality of holes formed in the first uncoated portion and the plurality of holes formed in the second uncoated portion.

9. The electronic device of claim 1,
wherein an adhesive is applied to at least a part of the plurality of holes formed in the first uncoated portion of the negative electrode or the plurality of holes formed in the second uncoated portion of the positive electrode, and
wherein the binder coated on the first separator and the binder coated on the second separator directly combine with the adhesive.

10. The electronic device of claim 7,
wherein the ceramic is applied to one surface and another surface of the separator fabric, and
wherein the adhesive binder is coated on an outer surface of the ceramic.

11. The electronic device of claim 1, wherein the second separator, the negative electrode, the first separator, and the positive electrode are stacked sequentially to form the battery in the roll shape.
